# EUROPÄISCHE PATENTSCHRIFT

(11) **EP 2 717 517 B1**
(45) Veröffentlichungstag und Bekanntmachung des Hinweises auf die Patenterteilung: **31.01.2018**
(21) Anmeldenummer: 13004378.9
(22) Anmeldetag: 07.09.2013
(51) Int. Cl.: H04L 12/28, H04B 3/54, G08B 13/00, G08B 21/04, G08B 29/18, H02J 13/00, H04L 12/12

(54) **PERSONEN-ANWESENHEITSERKENNUNGS-NETZWERK MIT EINER VIELZAHL VON GERÄTEN DER HAUSINSTALLATION / GEBÄUDESYSTEMTECHNIK**
NETWORK FOR DETECTING THE PRESENCE OF PERSONS WITH A PLURALITY OF HOUSE INSTALLATION/BUILDING SYSTEM DEVICES
RÉSEAU DE DÉTECTION DE LA PRÉSENCE DE PERSONNES DOTÉ D'UNE PLURALITÉ D'APPAREILS / SYSTÈMES DOMOTIQUES

(30) Priorität: 02.10.2012 DE 202012009494 U
(43) Veröffentlichungstag der Anmeldung: 09.04.2014
(73) Patentinhaber: ABB AG, 68309 Mannheim (DE)
(72) Erfinder: Krummel, Holger, 58515 Lüdenscheid (DE); Wegner, Tobias, 44147 Dortmund (DE); Zierach, Falk, 58513 Lüdenscheid (DE)

(56) Entgegenhaltungen:
- WO-A2-2008/048933
- US-B1- 6 912 429

## Beschreibung

Die Erfindung betrifft ein Personen-Anwesenheitserkennungs-Netzwerk mit einer Vielzahl von Geräten der Hausinstallation / Gebäudesystemtechnik.

Verschiedene Geräte in der Hausinstallation / Gebäudesystemtechnik verfügen über individuelle Betriebsmodi abhängig von der An- oder Abwesenheit von Benutzern/Bewohnern, wie z.B. verschiedene Sollwerte für die Raumtemperaturregelung. Die dazu notwendige Erkennung von anwesenden Personen findet in der Regel über Bewegungsmelder statt. Alternativ kann der Benutzer über Bedienelemente manuell zwischen verschiedenen Betriebsmodi umschalten.

In der US 6 912 429 B1 ist ein intelligente Haus-Automations-System beschrieben, welches mitttels Bewegungssensoren die Anwesenheit von Personen in bestimmten Räumen detektiert und über ein Kommunikationsnetzwerk zu einer zentralen Steuereinheit übertragen werden.

Die Verwendung von Bewegungsmeldern oder sogenannten Präsenzmeldern, die in der Regel nichts anderes sind als spezielle Bewegungsmelder mit besonderem Ansprechverhalten, erfordern zumindest ein Mindestmaß an Bewegung, um eine Person zu erkennen. Daher kann es bei ruhigen Tätigkeiten fälschlicherweise vorkommen, dass eine Person nicht mehr als anwesend erkannt wird. Ein Mittel, dies zu kompensieren, besteht in der Verlängerung der sogenannten Nachlaufzeit, also der Zeitspanne ohne Bewegung, nach welcher der Bewegungsmelder entscheidet, dass keine Person mehr vorhanden ist. Damit sinkt einerseits die Wahrscheinlichkeit, dass eine anwesende Person fälschlicherweise nicht mehr erkannt wird, gleichzeitig jedoch steigt damit die Zeitspanne an, in der eine verschwundene Person fälschlicherweise als anwesend erkannt wird. Im Extremfall wird somit immer eine Anwesenheit erkannt, völlig unabhängig davon, ob gerade eine Person real anwesend ist, oder nicht.

Die Nutzung einer dedizierten Benutzerschnittstelle, wie z. B. eines Schalters zum Wechsel zwischen den Betriebsmodi, erfordert eine Interaktion, die der Nutzer als lästig ansehen kann, oder die der Nutzer leicht vergisst.

Der Erfindung liegt die Aufgabe zugrunde, ein optimiertes Personen-Anwesenheitserkennungs-Netzwerk mit einer Vielzahl von Geräten der Hausinstallation / Gebäudesystemtechnik anzugeben.

Diese Aufgabe wird erfindungsgemäß gelöst durch ein Personen-Anwesenheitserkennungs-Netzwerk mit einer Vielzahl von Geräten der Hausinstallation / Gebäudesystemtechnik als Netzwerkteilnehmer, gemäß Anspruch 1, mit verschiedenen Ausführungsbeispiele, die in den abhängigen Ansprüchen definiert sind. Die Erfindung wird nachstehend an Hand der in der Zeichnung dargestellten Ausführungsbeispiele näher erläutert. Es zeigen:
- Fig. 1: eine Grundausführung des Personen-Anwesenheitserkennungs-Netzwerks,
- Fig. 2: ein an ein 230V-Wechselspannungsnetz angeschlossenes Personen-Anwesenheitserkennungs-Netzwerk,
- Fig. 3: eine Erweiterung des Personen-Anwesenheitserkennungs-Netzwerks gemäß Fig. 2 mit Powerline-Modem,
- Fig. 4: ein an ein Bussystem angeschlossenes Personen-Anwesenheitserkennungs-Netzwerk,
- Fig. 5: ein Personen-Anwesenheitserkennungs-Netzwerk mit einem Funknetz zur Kommunikation,
- Fig. 6: ein Personen-Anwesenheitserkennungs-Netzwerk mit nicht leitungsgebundener Energieversorgung.

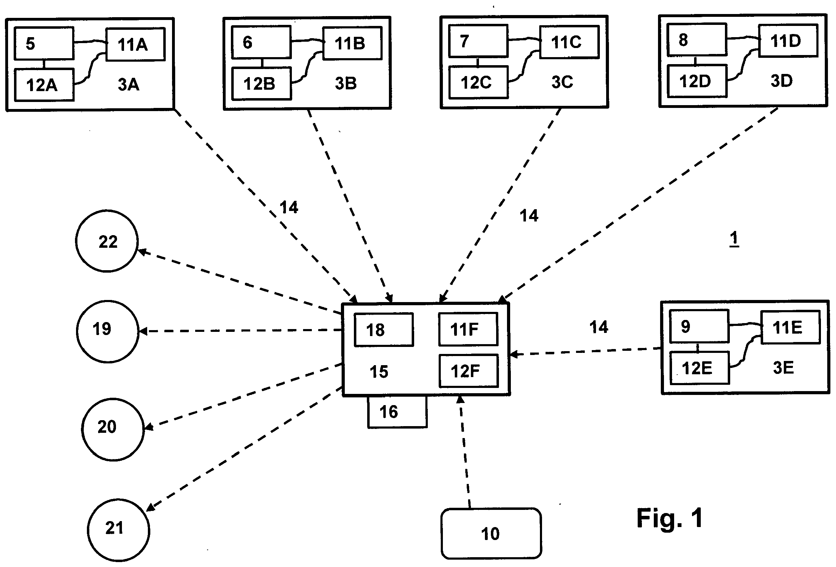

In Fig. 1 ist eine Grundausführung des Personen-Anwesenheitserkennungs-Netzwerks dargestellt. Als Netzwerk-Teilnehmer des Personen-Anwesenheitserkennungs-Netzwerks 1 sind beispielhaft gezeigt:
- ein Gerät 3A der Hausinstallation / Gebäudesystemtechnik, beispielsweise in Form eines Unterputz-Tastsensors oder Unterputz-Schalters zum Schalten einer Beleuchtung oder in Form eines Raumtemperaturreglers ausgeführt,
- ein Gerät 3B der Hausinstallation / Gebäudesystemtechnik, beispielsweise in Form eines Aufputz-Bewegungsmelders zum Schalten einer Beleuchtung ausgeführt,
- ein Gerät 3C der Hausinstallation / Gebäudesystemtechnik, beispielsweise in Form eines Helligkeitssensors / Dämmerungsschalters ausgeführt,
- ein Gerät 3D der Hausinstallation / Gebäudesystemtechnik, beispielsweise in Form eines Mikrofons ausgeführt,
- ein Gerät 3E der Hausinstallation / Gebäudesystemtechnik, beispielsweise in Form einer Kamera ausgeführt,
- eine Verarbeitungseinheit 15 als zentrale Baukomponente des Personen-Anwesenheitserkennungs-Netzwerks 1.

Vorstehend sind beispielhaft Unterputz-Schalter, Aufputz-Bewegungsmelder, Helligkeitssensoren / Dämmerungsschalter, Mikrofone und Kameras als Geräte der Hausinstallation / Gebäudesystemtechnik angeführt. Dabei kann es sich auch um ein Teilgerät eines Geräts der Hausinstallation / Gebäudesystemtechnik handeln. In gleicher Art und Weise können Geräte, wie Steckdosen, Jalousietaster, Wohnungsstation und/oder Türstation einer Türkommunikationsanlage, Dimmer, Rauchalarmdetektoren, Raumtemperaturregler, Telefon-Anschlussvorrichtungen, TV-Anschlussvorrichtungen, Control Panel usw. eingesetzt werden. Bei Gerät 3E kann es sich beispielsweise um die Kamera einer Türstation einer Türkommunikationsanlage handeln. Bei Gerät 3D kann es sich in gleicher Art und Weise um das Mikrofon einer Türstation einer Türkommunikationsanlage handeln.

Selbstverständlich können im konkreten Anwendungsfall auch beliebig weniger oder mehr Geräte der Hausinstallation / Gebäudesystemtechnik als Netzwerkteilnehmer vorhanden sein, als dies in Fig. 1 und in den weiteren Figuren gezeigt ist.

Das Gerät 3A weist unter anderem einen Tastsensor / Schalter / Bedienteil 5 zum Schalten einer Beleuchtung oder zur Einstellung einer gewünschten Raumtemperatur, eine Energie-Versorgungseinheit 11A und eine Kommunikationseinheit 12A auf.

Das Gerät 3B weist unter anderem einen Bewegungsmelder 6 zum Schalten einer Beleuchtung, eine Energie-Versorgungseinheit 11B und eine Kommunikationseinheit 12B auf. Das Gerät 3C weist unter anderem einen Helligkeitssensor / Dämmerungsschalter 7, eine Energie-Versorgungseinheit 11C und eine Kommunikationseinheit 12C auf. Das Gerät 3D weist unter anderem ein Mikrofon 8, eine Energie-Versorgungseinheit 11D und eine Kommunikationseinheit 12D auf. Das Gerät 3E weist unter anderem eine Kamera 9, eine Energie-Versorgungseinheit 11E und eine Kommunikationseinheit 12E auf.

Die Verarbeitungseinheit 15 des Personen-Anwesenheitserkennungs-Netzwerks 1 weist unter anderem eine Energie-Versorgungseinheit 11F, eine Kommunikationseinheit 12F, eine Bedieneinheit 16 und eine Ansteuereinheit 18 - beispielsweise in Form eines Aktors ausgeführt-auf und empfängt Datensignale der Geräte 3A, 3B, 3C, 3D, 3E über Kommunikationspfade 14. Durch die Datensignale wird der Verarbeitungseinheit 15 fortlaufend mitgeteilt, zu welchem bestimmten Zeitpunkt eine Person an einem bestimmten Ort innerhalb / außerhalb eines Gebäudes eine Aktion veranlasst hat.

Eine Aktion kann z. B. daraus bestehen,
- dass eine Person einen Tastsensor / Schalter / Bedienteil 5 betätigt hat, um beispielsweise eine Beleuchtung einzuschalten / auszuschalten oder einen gewünschten Raumtemperaturwert einzustellen: folglich gibt das Gerät 3A ein Datensignal an die Verarbeitungseinheit 15 ab;
- dass eine Person an einem Bewegungsmelder 6 vorbeigelaufen ist: folglich gibt das Gerät 3B ein Datensignal an die Verarbeitungseinheit 15 ab;
- dass eine Person an einem Helligkeitssensor / Dämmerungsschalter 7 vorbeigelaufen ist: folglich gibt das Gerät 3C ein Datensignal an die Verarbeitungseinheit 15 ab;
- dass die Schritte oder die Stimme einer Person von einem Mikrofon 8 erfasst worden sind: folglich gibt das Gerät 3D ein Datensignal an die Verarbeitungseinheit 15 ab;
- dass eine Person an einer Kamera 9 vorbeigelaufen ist: folglich gibt das Gerät 3E ein Datensignal an die Verarbeitungseinheit 15 ab.

Jedes Gerät 3A, 3B, 3C, 3D, 3E deckt für sich genommen lediglich einen relativ kleinen und begrenzten Ausschnitt innerhalb / außerhalb eines Gebäudes ab, z. B. den Flur, den Bereich der Haustür oder den Bereich um eine bestimmte Wohnungs- oder Zimmertür. Vielfach handelt es sich dabei um relativ kurze Datensignale, lediglich bei Bewegungsmeldern wird ein längeres Datensignal erzeugt, wenn eine länger andauernde Bewegung detektiert wird. Auf diese Weise kann die Anwesenheit von Personen zu bestimmten Zeitpunkten an bestimmten Orten eines Gebäudes festgestellt werden. Durch Kombination / Verknüpfung der von den verschiedenen Geräten 3A, 3B, 3C, 3D, 3E an die Verarbeitungseinheit 15 gelieferten Datensignale respektive deren Informationsgehalt kann insgesamt für einen bestimmten Raum oder ein Gebäude abgeschätzt werden, ob Personen anwesend sind oder nicht. So können Personen beispielsweise auf ihrem Weg durch ein Gebäude aufgrund der hierdurch ausgelösten Datensignale respektive deren Informationsgehalt "verfolgt" werden und es kann zuverlässig abgeschätzt werden, ob sie sich noch im Gebäude aufhalten oder ob sie das Gebäude verlassen haben. Des Weiteren kann die Anzahl der sich im Gebäude befindlichen Personen festgestellt werden.

Durch die Kombination / Verknüpfung der von den verschiedenen Geräten 3A, 3B, 3C, 3D, 3E an die Verarbeitungseinheit 15 gelieferten Datensignale respektive deren Informationsgehalt kann beispielsweise abgeschätzt werden, ob ein Einbruch in das Gebäude erfolgt ist. Ein Einbruch durch ein Fenster des Gebäudes kann erkannt werden, wenn innerhalb eines Gebäudes Datensignale von Geräten 3A, 3B, 3C, 3D, 3E an die Verarbeitungseinheit 15 geliefert werden, obwohl das den Eingangsbereich überwachende Gerät zuvor überhaupt kein entsprechendes Datensignal generiert hat.

Durch die Kombination / Verknüpfung der von den verschiedenen Geräten 3A, 3B, 3C, 3D, 3E an die Verarbeitungseinheit 15 gelieferten Datensignale respektive deren Informationsgehalt kann beispielsweise ein medizinischer Notfall erkannt werden. Von einem medizinischen Notfall kann beispielsweise ausgegangen werden, wenn sich in einem vorab festgelegten fest definierten Zeitraum - z. B. im Zeitraum zwischen 23 Uhr bis 5 Uhr- noch eine Person im Gebäude befindet, oder wenn sich in einem vorab festgelegten fest definierten Zeitraum eine Person nicht in einem vorab festgelegten Zimmer des Gebäudes (beispielsweise dem Schlafzimmer) befindet. Abhängig vom Resultat der Kombination / Verknüpfung der von den verschiedenen Geräten 3A, 3B, 3C, 3D, 3E an die Verarbeitungseinheit 15 gelieferten Datensignale kann die Ansteuereinheit 18 beispielsweise
- eine angeschlossene Beleuchtung 19 und/oder
- eine angeschlossene Alarmeinrichtung 20 und/oder
- ein angeschlossenes Hausnotrufgerät 21 und/oder
- eine Heizungsanlage / Klimatisierungsanlage 22 ansteuern.

Die Ansteuerung der Heizungsanlage / Klimatisierungsanlage 22 erfolgt in der Weise,
- dass die erforderliche Heizleistung gesenkt wird, wenn die Anzahl der im Gebäude befindlichen Personen ansteigt,
- dass die erforderliche Kühlleistung erhöht wird, wenn die Anzahl der im Gebäude befindlichen Personen ansteigt.

Über die Bedieneinheit 16 kann der Benutzer/Anwender/Endkunde gewünschte Einstellungen und Vorgaben vornehmen und Betriebsarten einstellen, des Weiteren können mittels der Bedieneinheit 16 die einzelnen Geräte 3A, 3B, 3C, 3D, 3E als Netzwerkteilnehmer separat aktiviert/deaktiviert werden. Die Bedieneinheit 16 kann auch in Form eines separaten Fernbedienung-Gerätes oder in Form eines Smartphones ausgebildet sein, welches über eine entsprechende Applikation mit der Verarbeitungseinheit 15 des Personen-Anwesenheitserkennungs-Netzwerks 1 kommunizieren kann.

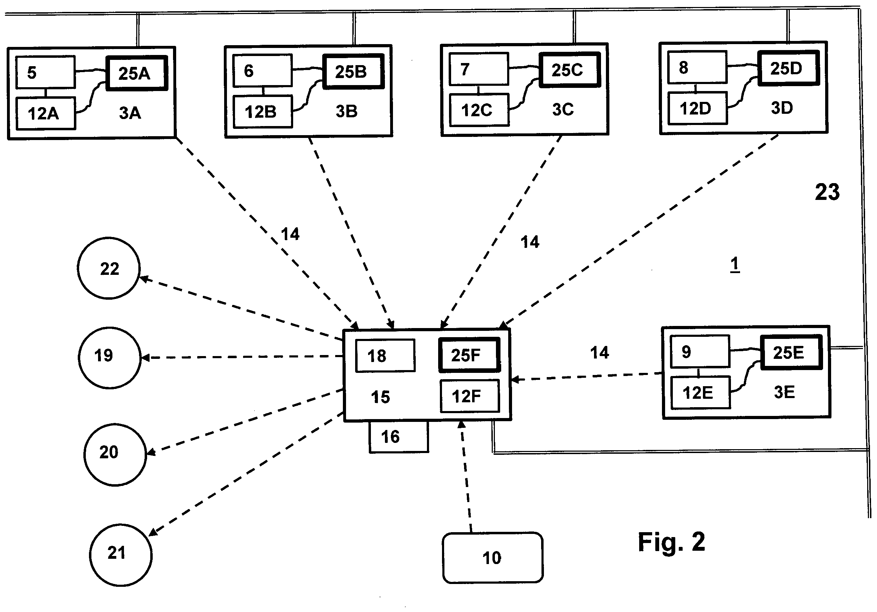

In Fig. 2 ist ein an ein 230V-Wechselspannungsnetz angeschlossenes Personen-Anwesenheitserkennungs-Netzwerk dargestellt. Bei dieser Ausführungsform erfolgt die Energieversorgung der Geräte über ein konventionelles 230V-Wechselspannungsnetz 23, welches an Netzteile 25A, 25B, 25C, 25D, 25E der Geräte 3A, 3B, 3C, 3D, 3E angeschlossen ist. In gleicher Art und Weise ist ein Netzteil 25F der Verarbeitungseinheit 15 des Personen-Anwesenheitserkennungs-Netzwerks 1 an das 230V-Wechselspannungsnetz 23 angeschlossen. Die übrige Konfiguration ist wie unter Fig. 1 beschrieben. Selbstverständlich können auch Wechselspannungsnetze mit von 230V abweichender Spannung Einsatz finden.

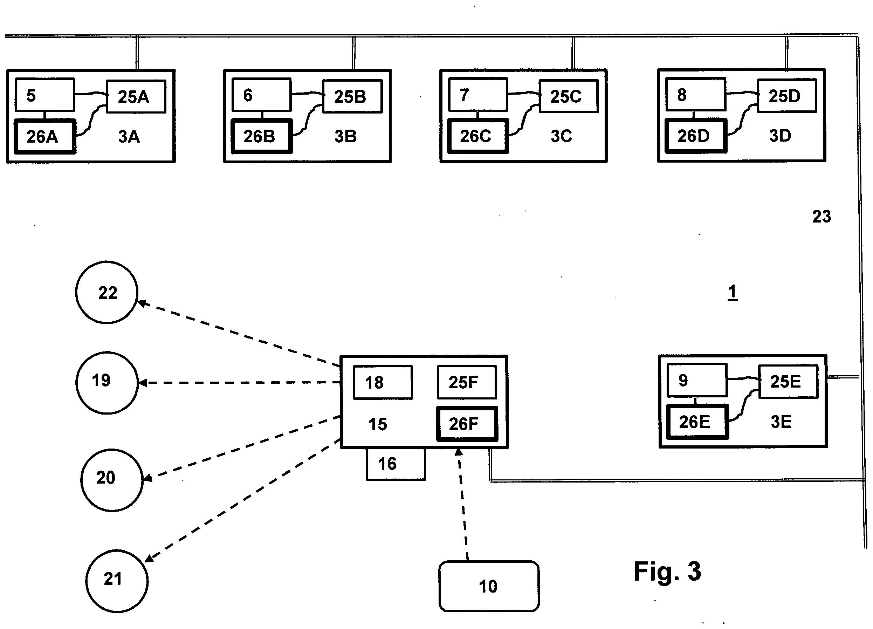

In Fig. 3 ist eine Erweiterung des Personen-Anwesenheitserkennungs-Netzwerks gemäß Fig. 2 mit Powerline-Modem dargestellt. Bei dieser Ausführungsform ist berücksichtigt, dass über das 230V-Wechselspannungsnetz 23 neben der Energieversorgung zusätzlich auch die Kommunikation erfolgen kann. Zur Realisierung der Kommunikationspfade 14 sind die Kommunikationseinheiten der Geräte 3A, 3B, 3C, 3D, 3E jeweils in Form eines Powerline-Modems 26A, 26B, 26C, 26D, 26E ausgeführt (Powerline Communication PLC). In gleicher Art und Weise besitzt auch die Verarbeitungseinheit 15 des Personen-Anwesenheitserkennungs-Netzwerks 1 ein Powerline-Modem 26F. Die übrige Konfiguration ist wie unter Fig. 2 beschrieben.

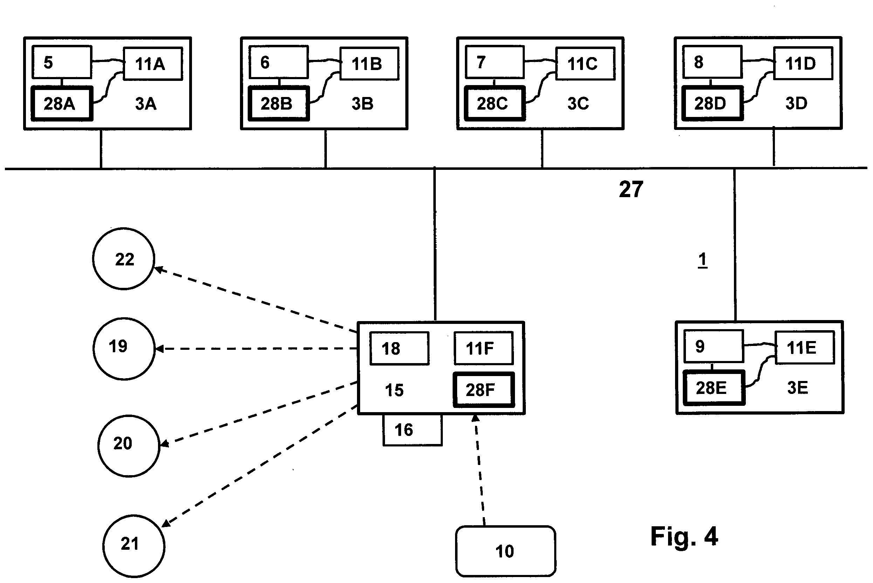

In Fig. 4 ist ein an ein Bussystem angeschlossenes Personen-Anwesenheitserkennungs-Netzwerk dargestellt. Bei dieser Ausführungsform erfolgt die Kommunikation der Geräte 3A, 3B, 3C, 3D, 3E mit der übergeordneten Verarbeitungseinheit 15 über ein Bussystem 27, welches an Busankoppler 28A, 28B, 28C, 28D, 28E (als Kommunikationseinheiten) der Geräte 3A, 3B, 3C, 3D, 3E angeschlossen ist. In gleicher Art und Weise besitzt auch die Verarbeitungseinheit 15 des Personen-Anwesenheitserkennungs-Netzwerks 1 einen Busankoppler 28F. Die übrige Konfiguration ist wie unter Fig. 1 beschrieben. Als Bussysteme 27 können beispielsweise Anwendung finden:
- KNX (Feldbus zur Gebäudeautomation, Nachfolger des Feldbusses EIB),
- LAN/Ethernet (Local Area Network).

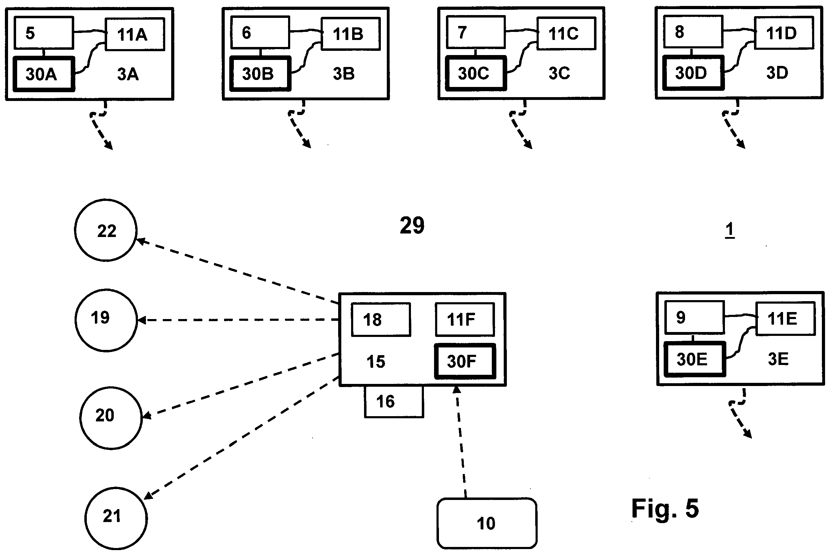

In Fig. 5 ist ein Personen-Anwesenheitserkennungs-Netzwerk mit einem Funknetz zur Kommunikation dargestellt. Bei dieser Ausführungsform erfolgt die Kommunikation der Geräte 3A, 3B, 3C, 3D, 3E mit der übergeordneten Verarbeitungseinheit 15 über ein Funknetz 29. Die Geräte 3A, 3B, 3C, 3D, 3E und die Verarbeitungseinheit 15 des Personen-Anwesenheitserkennungs-Netzwerks 1 sind zur Realisierung einer Funk-Kommunikation mit Funkeinrichtungen 30A, 30B, 30C, 30D, 30E, 30F (als Kommunikationseinheiten) ausgerüstet. Die übrige Konfiguration ist wie unter Fig. 1 beschrieben. Dabei kann die Vernetzung über Funk unter Verwendung beliebiger analoger oder digitaler Standards erfolgen, beispielsweise in Form von
- WLAN (Wireless Local Area Network),
- ZigBee,
- 6LoWPAN (IPv6 over Low power Wireless Personal Area Network),
- KNF-RF (Radio Frequency KNX, d. h. KNX über Funk).

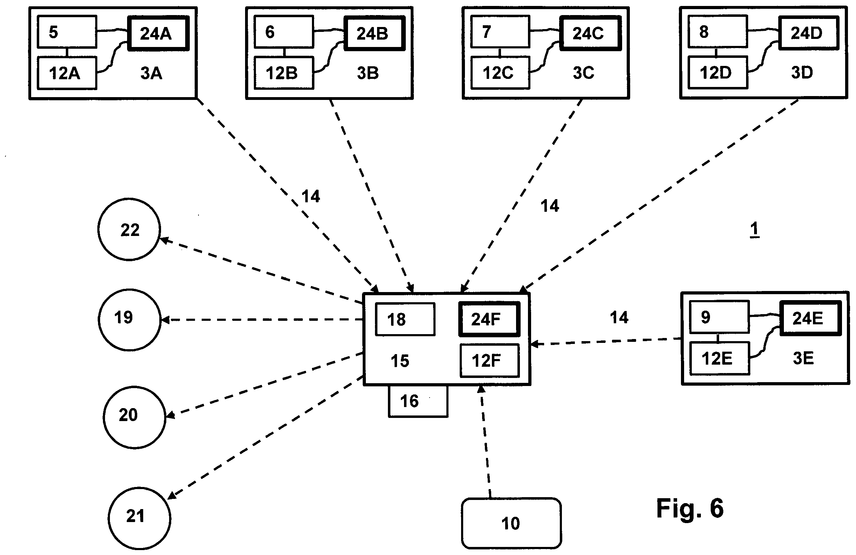

In Fig. 6 ist ein Personen-Anwesenheitserkennungs-Netzwerk mit nicht leitungsgebundener Energieversorgung dargestellt. Bei dieser Ausführungsform erfolgt die Energieversorgung der Geräte 3A, 3B, 3C, 3D, 3E und der Verarbeitungseinheit 15 über jeweils separate Batterien oder separate Akkumulatoren, vorzugsweise in Verbindung mit Energy-Harvesting- Vorrichtungen 24A, 24B, 24C, 24D, 24E, 24F. Die übrige Konfiguration ist wie unter Fig. 1 beschrieben.

Unter dem Begriff Energy-Harvesting wird insbesondere die Mikro-Energiegewinnung aus der Umgebung auf thermischer oder mechanischer oder optischer oder chemischer Basis verstanden, z. B. aus Umgebungsgeräuschen (Schall), aus der Umgebungstemperatur, aus Luftströmungen oder aus Lichtstrahlung.

Allgemein ist es nicht erforderlich, dass die Geräte 3A, 3A, 3C, 3D, 3E zwingend über ein und dasselbe Übertragungsmedium und -protokoll mit der Verarbeitungseinheit 15 kommunizieren. Es ist vielmehr auch eine heterogene Struktur möglich, d. h.
- z. B. ein Teil der Netzwerkteilnehmer kommuniziert über Funk/drahtlos und ein anderer Teil der Netzwerkteilnehmer kommuniziert über Kabel/drahtgebunden;
- z. B. ein Teil der Netzwerkteilnehmer kommuniziert analog und ein anderer Teil der Netzwerkteilnehmer kommuniziert digital.

Allgemein ist es auch nicht erforderlich, dass die Geräte 3A, 3A, 3C, 3D, 3E und die Verarbeitungseinheit 15 zwingend über ein und dieselbe Energie-Versorgungseinheit verfügen. Auch hier ist vielmehr eine heterogene Struktur des Netzwerks möglich, d. h. ein Teil der Netzwerkteilnehmer liegt beispielsweise über einem Netzteil am konventionellen 230V-Versorgungsspannungsnetz und ein anderer Teil der Netzwerkteilnehmer weist Batterien oder Akkumulatoren in Verbindung mit Energy-Harvesting-Vorrichtungen auf.

Die vorstehend erläuterte "Intelligente Anwesenheitserkennung" kann um zusätzliche Sensoren 10 ergänzt werden, welche Datensignale an die Verarbeitungseinheit 15 abgeben, wie insbesondere:
- Smartphones und/oder
- Tablet-Computer bzw. Tablet-PCs und/oder
- Navigationssysteme in PKWs und/oder
- an das Internet angeschlossene Rechner,
   um auf diese Weise Datensignale zu erhalten, die zusätzliche Informationen beinhalten, welche Bewohner des betrachteten Gebäudes betreffen, wie beispielsweise
- aktuelle Reiseplanung eines Bewohners und/oder
- aktuelle Kalendereinträge eines Bewohners und/oder
- aktuelle Geo-Daten des PKWs eines Bewohners.

Mit Hilfe dieser zusätzlichen Informationen dieser zusätzlichen Sensoren 10 ist eine Abschätzung möglich, ob sich bestimmte Bewohner überhaupt noch im Gebäude befinden können und, falls nicht, wann mit ihrer Rückkehr in das Gebäude zu rechnen ist. Dies dient der weiteren Optimierung der "Intelligente Anwesenheitserkennung". In den Figuren sind diese zusätzlichen Sensoren 10 sowie der Kommunikationspfad zwischen Sensor 10 und Verarbeitungseinheit 10 jeweils pauschal skizziert.

### Bezugszeichenliste

1 Personen-Anwesenheitserkennungs-Netzwerk
2 -
3 3A, 3B, 3C, 3D, 3E Gerät der Hausinstallation / Gebäudesystemtechnik
4 -
5 Tastsensor / Schalter / Bedienteil
6 Bewegungsmelder
7 Helligkeitssensor / Dämmerungsschalter
8 Mikrofon
9 Kamera
10 Zusätzliche(r) Sensor(en), wie Smartphone, Tablet-PC, Navigationsgerät
11 11A, 11B, 11C, 11D, 11E, 11F Energie-Versorgungseinheit
12 12A, 12B, 12C, 12D, 12E, 12F Kommunikationseinheit
13 -
14 Kommunikationspfad
15 Verarbeitungseinheit
16 Bedieneinheit
17 -
18 Ansteuereinheit
19 Beleuchtung
20 Alarmeinrichtung
21 Hausnotrufgerät
22 Heizungsanlage / Klimatisierungsanlage
23 Konventionelles 230V-Versorgungsspannungsnetz
24 24A, 24B, 24C, 24D, 24E, 24F Batterie oder Akkumulator in Verbindung mit Energy-Harvesting-Vorrichtung
25 25A, 25B, 25C, 25D, 25E, 25F Netzteil
26 26A, 26B, 26C, 26D, 26E, 26F Powerline-Modem
27 Bussystem
28 28A, 28B, 28C, 28D, 28E, 28F Busankoppler
29 Funknetz
30 30A, 30B, 30C, 30D, 30E, 30F Funkeinrichtung

## Patentansprüche

1. Personen-Anwesenheitserkennungs-Netzwerk (1) mit einer Vielzahl von Geräten (3A, 3B, 3C, 3D, 3E, 3F) einer Hausinstallation und/oder Gebäudesystemtechnik als Netzwerkteilnehmer, mit einer zentralen Verarbeitungseinheit (15) und Kommunikationspfaden (14) zwischen den Geräten (3A, 3B, 3C, 3D, 3E),
• wobei jedes dieser Geräte (3A, 3B, 3C, 3D, 3E) eine Energie-Versorgungseinheit (11A, 11B, 11C, 11D, 11E), eine Kommunikationseinheit, (12A, 12B, 12C, 12D, 12E), ein Bedienteil (5), einen Bewegungsmelder (3B) zum Schalten der Beleuchtung, eine erste Einheit, eine zweite Einheit und eine dritte Einheit aufweisen,
wobei das Personen-Anwesenheitserkennungs-Netzwerk **dadurch gekennzeichnet ist, dass**
• die erste Einheit ein Unterputz-Tastsensor und/oder ein Unterputz-Schalter (3A) ist,
• der Unterputz-Schalter (3A) ein Unterputz-Schalter zum Schalten einer Beleuchtung oder ein Raumtemperaturreglers ist,
• die zweite Einheit ein Helligkeitssensor oder ein Dämmerungsschalter (3C) ist,
• die dritte Einheit ein Mikrofon (3D) einer Türstation einer Türkommunikationsanlage oder eine Kamera (3E) einer Türkommunikationsanlage ist,
• die zentrale Verarbeitungseinheit (15) als weiterer Netzwerkteilnehmer mit einer Energie-Versorgungseinheit (11F) und einer Kommunikationseinheit (12F) vorgesehen ist,
• Kommunikationspfade (14) zwischen den Geräten (3A, 3B, 3C, 3D, 3E) und der zentralen Verarbeitungseinheit (15) zur Übertragung von Datensignalen vorgesehen sind,
• die Netzwerkteilnehmer dazu geeignet sind, mittels Powerline-Modems (26A, 26B, 26C, 26D, 26E) über das Wechselspannungsnetz mit der zentralen Verarbeitungseinheit (15) kommunizieren, oder
• die Netzwerkteilnehmer dazu geeignet sind, mittels Busankopplern (28A, 28B, 28C, 28D, 28E, 28F, über das Bussystem (27) mit der zentralen Verarbeitungseinheit (15) kommunizieren,
• das Personen-Anwesenheitserkennungs-Netzwerk (1) dazu ausgebildet ist, dass die Geräte (3A, 3B, 3C, 3D, 3E) Datensignale erzeugen und an die Verarbeitungseinheit (15) abgeben, sobald ein Zutritt von Personen zum Gebäude oder zu bestimmten Zimmern des Gebäudes und ein Verlassen des Gebäudes oder von bestimmten Zimmern des Gebäudes von Personen erfolgt, und dass das Personen-Anwesenheitserkennungs-Netzwerk unter Verwendung dieser Datensignaie die Anwesenheit einer Person an einem bestimmten Ort zu einem bestimmten Zeitpunkt dokumentiert,
• die Verarbeitungseinheit (15) dazu ausgebildet ist, die Datensignale zu empfangen und zu verarbeiten, und durch die Verarbeitung der Datensignale den Zutritt von Personen zum Gebäude oder zu bestimmten Zimmern des Gebäudes und das Verlassen des Gebäudes oder von bestimmten Zimmern des Gebäudes von Personen nachzubilden, den Weg von Personen durch das Gebäude oder zu bestimmten Zimmern des Gebäudes nachzuverfolgen und die Anzahl der im Gebäude befindlichen Personen festzustellen.

2. Personen-Anwesenheitserkennungs-Netzwerk (1) nach Anspruch 1, wobei die Verarbeitungseinheit (15) eine Ansteuereinheit (18) aufweist, welche abhängig vom Resultat der Verarbeitung der empfangenen Datensignale beaufschlagbar ist.

3. Personen-Anwesenheitserkennungs-Netzwerk (1) nach Anspruch 2, wobei eine Beleuchtung (19) an die Ansteuereinheit (18) angeschlossen ist, deren Ausschaltung erfolgt, wenn die Auswertung der Datensignale ergibt, dass sich keine Person mehr im Gebäude befindet.

4. Personen-Anwesenheitserkennungs-Netzwerk (1) nach Anspruch 2, wobei eine Heizungsanlage und/oder Klimatisierungsanlage (22) an die Ansteuereinheit (18) angeschlossen ist, die in Abhängigkeit von der im Gebäude befindlichen Personenanzahl regelbar ist.

5. Personen-Anwesenheitserkennungs-Netzwerk (1) nach Anspruch 2, wobei eine Alarmeinrichtung (20) an die Ansteuereinheit (18) angeschlossen ist, die einen Alarm absetzt, wenn die Auswertung der Datensignale ergibt, dass eine Person in das Gebäude eingebrochen ist.

6. Personen-Anwesenheitserkennungs-Netzwerk (1) nach Anspruch 2, wobei ein Hausnotrufgerät (21) an die Ansteuereinheit (18) angeschlossen ist, die einen Notruf abgesetzt, wenn die Auswertung der Datensignale ergibt, dass sich eine Person im Gebäude befindet, welche sich mit großer Wahrscheinlichkeit in einer hilfsbedürftigen Situation befindet.

7. Personen-Anwesenheitserkennungs-Netzwerk (1) nach mindestens einem der Ansprüche 1 - 6, wobei die Verarbeitungseinheit (15) mit einer Bedieneinheit (16) versehen ist.

8. Personen-Anwesenheitserkennungs-Netzwerk (1) nach Anspruch 1, wobei die Energie-Versorgungseinheiten (11A, 11B, 11C, 11D, 11E, 11F) in Form von Netzteilen (25A, 25B, 25C, 25D, 25E, 25F) ausgeführt sind, welche primärseitig an das Wechselspannungsnetz (23) angeschlossen sind.

9. Personen-Anwesenheitserkennungs-Netzwerk (1) nach Anspruch 1, wobei die Energie-Versorgungseinheiten (11A, 11B, 11C, 11D, 11E, 11F) in Form von Batterien oder Akkumulatoren (24A, 24B, 24C, 24D, 24E, 24F) ausgeführt sind.

10. Personen-Anwesenheitserkennungs-Netzwerk (1) nach Anspruch 9, wobei die Akkumulatoren (24A, 24B, 24C, 24D, 24E, 24F) mit einer Energy-Harvesting-Vorrichtung verbunden sind.

11. Personen-Anwesenheitserkennungs-Netzwerk (1) nach mindestens einem der vorstehenden Ansprüche, wobei die Kommunikationseinheiten der Netzwerkteilnehmer in Form von Funkeinrichtungen (30A, 30B, 30C, 30D, 30E, 30F) zur Kommunikation über ein Funknetz (29) ausgebildet sind.

12. Personen-Anwesenheitserkennungs-Netzwerk (1) nach mindestens einem der vorstehenden Ansprüche, wobei die Verarbeitungseinheit (15) dazu ausgebildet ist, Datensignale mindestens eines zusätzlichen Sensors (10), wie Smartphone und/oder Tablet-PC und/oder Navigationsgerät, zu empfangen.

## Claims

1. Network (1) for detecting the presence of persons, having a multiplicity of home installation and/or building systems technology devices (3A, 3B, 3C, 3D, 3E, 3F) as network subscribers, having a central processing unit (15) and communication paths (14) between the devices (3A, 3B, 3C, 3D, 3E),
• wherein each of these devices (3A, 3B, 3C, 3D, 3E) has an energy supply unit (11A, 11B, 11C, 11D, 11E), a communication unit (12A, 12B, 12C, 12D, 12E), an operating part (5), a motion detector (3B) for switching the lighting system, a first unit, a second unit and a third unit,
wherein the network for detecting the presence of persons is **characterized in that**
• the first unit is a flush-mounted tactile sensor and/or a flush-mounted switch (3A),
• the flush-mounted switch (3A) is a flush-mounted switch for switching a lighting system or a room temperature controller,
• the second unit is a brightness sensor or a dimmer switch (3C),
• the third unit is a microphone (3D) of a door station of a door communication system or a camera (3E) of a door communication system,
• the central processing unit (15) is provided as a further network subscriber having an energy supply unit (11F) and a communication unit (12F),
• communication paths (14) are provided between the devices (3A, 3B, 3C, 3D, 3E) and the central processing unit (15) for the purpose of transmitting data signals,
• the network subscribers are suitable for communicating with the central processing unit (15) by means of powerline modems (26A, 26B, 26C, 26D, 26E) via the AC voltage power supply, or
• the network subscribers are suitable for communicating with the central processing unit (15) by means of bus couplers (28A, 28B, 28C, 28D, 28E, 28F) via the bus system (27),
• the network (1) for detecting the presence of persons is designed such that the devices (3A, 3B, 3C, 3D, 3E) generate data signals and emit them to the processing unit (15) as soon as persons enter the building or particular rooms of the building or persons leave the building or particular rooms of the building, and **in that** the network for detecting the presence of persons documents the presence of a person at a particular location at a particular time using these data signals,
• the processing unit (15) is designed to receive and process the data signals and, by processing the data signals, to simulate the entry of persons to the building or to particular rooms of the building and the leaving of the building or particular rooms of the building by persons, to track the path of persons through the building or to particular rooms of the building and to determine the number of persons in the building.

2. Network (1) for detecting the presence of persons according to Claim 1, wherein the processing unit (15) has a control unit (18) which can be activated depending on the result of the processing of the received data signals.

3. Network (1) for detecting the presence of persons according to Claim 2, wherein a lighting system (19) is connected to the control unit (18), which lighting system is switched off if the evaluation of the data signals reveals that there is no longer a person in the building.

4. Network (1) for detecting the presence of persons according to Claim 2, wherein a heating system and/or an air-conditioning system (22) is/are connected to the control unit (18) and can be controlled on the basis of the number of persons in the building.

5. Network (1) for detecting the presence of persons according to Claim 2, wherein an alarm device (20) is connected to the control unit (18) and transmits an alarm if the evaluation of the data signals reveals that a person has broken into the building.

6. Network (1) for detecting the presence of persons according to Claim 2, wherein a home emergency call device (21) is connected to the control unit (18) and transmits an emergency call if the evaluation of the data signals reveals that a person who is very probably in need of help is in the building.

7. Network (1) for detecting the presence of persons according to at least one of Claims 1-6, wherein the processing unit (15) is provided with an operating unit (16).

8. Network (1) for detecting the presence of persons according to Claim 1, wherein the energy supply units (11A, 11B, 11C, 11D, 11E, 11F) are in the form of power supply units (25A, 25B, 25C, 25D, 25E, 25F) which are connected, on the primary side, to the AC voltage power supply (23).

9. Network (1) for detecting the presence of persons according to Claim 1, wherein the energy supply units (11A, 11B, 11C, 11D, 11E, 11F) are in the form of batteries or rechargeable batteries (24A, 24B, 24C, 24D, 24E, 24F).

10. Network (1) for detecting the presence of persons according to Claim 9, wherein the rechargeable batteries (24A, 24B, 24C, 24D, 24E, 24F) are connected to an energy harvesting apparatus.

11. Network (1) for detecting the presence of persons according to at least one of the preceding claims, wherein the communication units of the network subscribers are in the form of radio devices (30A, 30B, 30C, 30D, 30E, 30F) for communicating via a radio network (29).

12. Network (1) for detecting the presence of persons according to at least one of the preceding claims, wherein the processing unit (15) is designed to receive data signals from at least one additional sensor (10) such as a smartphone and/or a tablet PC and/or a navigation device.

## Revendications

1. Réseau de détection de la présence de personnes (1) comportant une pluralité d'appareils (3A, 3B, 3C, 3D, 3D, 3F) d'une installation domestique et/ou de systèmes domotiques en tant que participants au réseau, comportant une unité de traitement (15) centrale et des trajets de communication (14) entre les appareils (3A, 3B, 3C, 3D, 3E),
- dans lequel chacun desdits appareils (3A, 3B, 3C, 3D, 3E) comporte une unité d'alimentation en énergie (11A, 11B, 11C, 11D, 11E), une unité de communication (12A, 12B, 12C, 12D, 12E), une partie de commande (5) et un détecteur de mouvement (3B) destiné à activer l'éclairage, une première unité, une deuxième unité et une troisième unité,
dans lequel le réseau de détection de la présence de personnes est **caractérisé en ce que**
- la première unité est un capteur tactile encastré et/ou un commutateur encastré (3A),
- le commutateur encastré (3A) est un commutateur encastré destiné à activer un éclairage ou un régulateur de température ambiante,
- la deuxième unité est un capteur de luminosité ou un variateur de lumière (3C),
- la troisième unité est un microphone (3D) d'une station de porte d'une installation de communication de porte ou une caméra (3E) d'une installation de communication de porte,
- l'unité de traitement (15) centrale, en tant qu'autre participant au réseau, est munie d'une unité d'alimentation en énergie (11F) et d'une unité de communication (12F),
- des trajets de communication (14B) sont prévus entre les appareils (3A, 3B, 3C, 3D, 3E) et l'unité de traitement (15) centrale pour transmettre des signaux de données,
- les participants au réseau sont conçus pour communiquer au moyen de modems pour réseau électrique (26A, 26B, 26C, 26D, 26E) par l'intermédiaire du réseau à tension alternative avec l'unité de traitement (15) centrale, où
- les participants au réseau sont conçus pour communiquer au moyen de coupleurs de bus (28A, 28B, 28C, 28D, 28E, 28F) par l'intermédiaire du système de bus (27) avec l'unité de traitement (15) centrale,
- le réseau de détection de la présence de personnes (1) est conçu de telle sorte que les appareils (3A, 3B, 3C, 3D, 3E) génèrent des signaux de données et les délivrent à l'unité de traitement (15) dès que des personnes entrent dans le bâtiment ou dans des pièces déterminées du bâtiment et que des personnes sortent du bâtiment ou de pièces déterminées du bâtiment, et de telle sorte que le réseau de détection de la présence de personnes signale la présence d'une personne à un endroit déterminé et à un instant déterminé en utilisant lesdits signaux de données,
- l'unité de traitement (15) est conçue pour recevoir et traiter les signaux de données et pour reconstituer l'entrée de personnes dans le bâtiment ou dans des pièces déterminées du bâtiment et la sortie de personnes du bâtiment ou de pièces déterminées du bâtiment en traitant les signaux de données, afin d'effectuer un suivi du trajet parcouru par des personnes à travers le bâtiment ou dans des pièces déterminées du bâtiment et pour établir le nombre des personnes présentes dans le bâtiment.

2. Réseau de détection de la présence de personnes (1) selon la revendication 1, dans lequel l'unité de traitement (15) comporte une unité de commande (18) qui peut être activée en fonction du résultat du traitement des signaux de données reçus.

3. Réseau de détection de la présence de personnes (1) selon la revendication 2, dans lequel un éclairage (19) est raccordé à l'unité de commande (18), une désactivation dudit éclairage se produisant lorsque l'évaluation des signaux de données indique que plus personne ne se trouve dans le bâtiment.

4. Réseau de détection de la présence de personnes (1) selon la revendication 2, dans lequel une installation de chauffage et/ou une installation de climatisation (22) est raccordée à l'unité de commande (18), ladite installation pouvant être régulée en fonction du nombre de personnes présentes dans le bâtiment.

5. Réseau de détection de la présence de personnes (1) selon la revendication 2, dans lequel un dispositif d'alarme (20) est raccordé à l'unité de commande (18), ledit dispositif d'alarme déclenchant une alarme lorsque l'évaluation des signaux de données indique qu'une personne s'est introduite par effraction dans le bâtiment.

6. Réseau de détection de la présence de personnes (1) selon la revendication 2, dans lequel un appareil d'appel d'urgence domestique (21) est raccordé à l'unité de commande (18), ledit appareil déclenchant un appel d'urgence lorsque l'évaluation des signaux de données indique qu'une personne se trouvant de façon très probable dans une situation de détresse est présente dans le bâtiment.

7. Réseau de détection de la présence de personnes (1) selon au moins l'une des revendications 1-6, dans lequel l'unité de traitement (15) est munie d'une unité de commande (16).

8. Réseau de détection de la présence de personnes (1) selon la revendication 1, dans lequel les unités d'alimentation en énergie (11A, 11B, 11C, 11D, 11E, 11F) sont réalisées sous la forme de blocs d'alimentation (25A, 25B, 25C, 25D, 25E, 25F) qui sont reliés, côté primaire, au réseau à tension alternative (23).

9. Réseau de détection de la présence de personnes (1) selon la revendication 1, dans lequel les unités d'alimentation en énergie (11A, 11B, 11C, 11D, 11E, 11F) sont réalisées sous la forme de batteries ou d'accumulateurs (24A, 24B, 24C, 24D, 24E, 24F).

10. Réseau de détection de la présence de personnes (1) selon la revendication 9, dans lequel les accumulateurs (24A, 24B, 24C, 24D, 24E, 24F) sont reliés à un dispositif de collecte d'énergie.

11. Réseau de détection de la présence de personnes (1) selon au moins l'une des revendications précédentes, dans lequel les unités de communication des participants au réseau sont réalisées sous la forme de dispositifs radio (30A, 30B, 30C, 30D, 30E, 30F) destinés à communiquer par l'intermédiaire d'un réseau radio (29).

12. Réseau de détection de la présence de personnes (1) selon au moins l'une des revendications précédentes, dans lequel l'unité de traitement (15) est conçue pour recevoir des signaux de données d'au moins un capteur supplémentaire (10) tel qu'un téléphone intelligent et/ou qu'une tablette PC et/ou qu'un appareil de navigation.
